# FASCICULE DE BREVET EUROPEEN

(11) **EP 3 996 244 B1**
(45) Date de publication et mention de la délivrance du brevet: **27.12.2023**
(21) Numéro de dépôt: 21204820.1
(22) Date de dépôt: 26.10.2021
(51) Int. Cl.: H02J 50/10, H02J 50/50, H02S 40/36

(54) **ELÉMENT DE COUVERTURE FONCTIONNALISÉ ET INFRASTRUCTURE COMPORTANT PLUSIEURS ÉLÉMENTS DE COUVERTURE FONCTIONNALISÉS**
FUNKTIONALISIERTES ABDECKELEMENT UND INFRASTRUKTUR MIT MEHREREN SOLCHEN FUNKTIONALISIERTEN ABDECKELEMENTEN
FUNCTIONALISED COVERAGE ELEMENT AND INFRASTRUCTURE COMPRISING SEVERAL FUNCTIONALISED COVERAGE ELEMENTS

(30) Priorité: 09.11.2020 FR 2011481
(43) Date de publication de la demande: 11.05.2022
(73) Titulaire: Commissariat à l'énergie atomique et aux énergies alternatives, 75015 Paris (FR)
(72) Inventeur: CHAINTREUIL, Nicolas, 38054 GRENOBLE CEDEX 09 (FR); CLAUDON, Fabrice, 38054 GRENOBLE CEDEX 09 (FR); LE BLEVENNEC, Yoann, 38054 GRENOBLE CEDEX 09 (FR); THONY, Philippe, 38054 GRENOBLE CEDEX 09 (FR)
(74) Mandataire: INNOV-GROUP

(56) Documents cités:
- EP-A1- 3 454 452
- DE-A1-102010 019 815
- US-A1- 2014 352 760
- US-A1- 2019 221 692
- US-B2- 8 829 724

## Description

### Domaine technique de l'invention

La présente invention se rapporte à un élément de couverture fonctionnalisé et à une infrastructure qui comporte plusieurs de ces éléments de couverture fonctionnalisés.

### Etat de la technique

Un système de liaison électrique sans contact est réalisé en positionnant, l'un par rapport à l'autre, un premier ensemble portant un enroulement primaire et un deuxième ensemble portant un enroulement secondaire. Les deux enroulements sont galvaniquement et électriquement isolés l'un de l'autre et placés en vis-à-vis (à une distance suffisante l'un de l'autre), assurant entre eux un couplage inductif. Entre les deux ensembles, la transmission d'énergie est donc réalisée sans contact, par induction.

Pour assurer une liaison électrique sans contact fiable et avec un bon rendement, le positionnement relatif des deux enroulements doit être parfaitement réglé. La demande de brevet FR3038204A1 rappelle ce principe. Ce document propose pour cela de placer les deux enroulements dans deux carters de forme et de dimensions identiques.

Récemment, il a été proposé d'utiliser le principe de l'induction dans le domaine des infrastructures de type photovoltaïque. Pour chaque panneau photovoltaïque de l'installation, un coupleur inductif primaire et un coupleur inductif sont positionnés en regard, permettant un transfert de l'énergie électrique sans contact du panneau vers un réseau électrique ou vers un système de stockage.

La demande de brevet WO2019/115910A1 décrit ainsi une route formée par l'assemblage de dalles photovoltaïques juxtaposées. Chaque dalle est munie d'un coupleur inductif primaire qui est positionné en regard d'un coupleur inductif secondaire placé dans une cavité. La demande de brevet EP3609050A1 propose pour sa part d'utiliser un mécanisme qui permet de déplacer le coupleur inductif secondaire situé sous une dalle photovoltaïque, grâce à une tirette, en vue de venir le placer en vis-à-vis du coupleur inductif primaire, solidaire de la dalle photovoltaïque.

La demande de brevet US2019/221692A1 décrit pour sa part une architecture qui comporte plusieurs modules solaires flexibles.

Les solutions actuelles ne sont cependant pas optimales en termes de facilité d'installation. Des opérations de câblage électrique restent nécessaires et la mise en place des panneaux ou dalles implique toujours un ajustement relatif des deux coupleurs inductifs.

Le but de l'invention est donc de proposer un élément de couverture fonctionnalisé, dont l'installation au sein d'une infrastructure plus globale est grandement facilitée par rapport aux solutions antérieures. Cette installation pourra notamment se faire avec un minimum d'opérations de câblage électrique.

### Exposé de l'invention

Ce but est atteint par un élément de couverture qui est fonctionnalisé par un module de type générateur ou récepteur d'énergie électrique, et destiné à recouvrir une zone, ledit élément de couverture comprenant un système de conversion d'une énergie électrique sur lequel est connecté ledit module, ledit système de conversion étant commandé pour fournir de l'énergie électrique au module ou pour convertir l'énergie électrique fournie par le module, ledit élément de couverture étant caractérisé en ce qu'il comporte :
- Un premier coupleur inductif connecté audit système de conversion et agencé pour établir une première liaison sans contact avec un premier élément de couverture adjacent,
- Un deuxième coupleur inductif connecté audit système de conversion et agencé pour établir une deuxième liaison sans contact avec un deuxième élément de couverture adjacent, distinct du premier élément de couverture et en ce que
- Ledit module de type générateur ou récepteur d'énergie électrique, le système de conversion, le premier coupleur inductif et le deuxième coupleur inductif sont réunis dans un même ensemble monobloc.

Selon une particularité, le système de conversion comporte au moins un étage DC sur lequel est connecté ledit module.

Selon une autre particularité, ledit étage DC comporte un bus DC à deux ou trois lignes d'alimentation.

Selon une réalisation particulière, le système de conversion comporte un premier étage AC auquel est connecté d'une part le premier coupleur inductif et d'autre part ledit au moins un étage DC.

Selon une particularité, le système de conversion comporte un deuxième étage AC auquel est connecté d'une part le deuxième coupleur inductif et d'autre part ledit au moins un étage DC.

Selon une autre particularité, l'élément de couverture comporte un circuit de suivi du point maximal de puissance, connecté audit module et audit au moins un étage DC.

Selon une réalisation particulière, l'élément de couverture se présente sous la forme d'un panneau disposant à deux côtés opposés de deux formes complémentaires, la première forme définissant une première surface de chevauchement sous laquelle est placé le premier coupleur inductif et la deuxième forme définissant une deuxième surface de chevauchement sous laquelle est placé le deuxième coupleur inductif.

Selon une autre réalisation particulière, le module est de type photovoltaïque.

Selon une autre réalisation particulière, le module est de type lumineux.

L'invention concerne également une infrastructure électrique fonctionnalisée, comprenant au moins trois éléments de couverture, chacun fonctionnalisé par un module de type générateur ou récepteur d'énergie électrique, ladite infrastructure étant caractérisé par le fait que :
- Chaque élément de couverture est tel que défini ci-dessus,
- Lesdits éléments de couverture fonctionnalisés sont positionnés de manière adjacentes,
- Chaque élément de couverture fonctionnalisé étant connecté à au moins un élément de couverture fonctionnalisé adjacent par une liaison électrique sans contact établi par couplage inductif entre son premier coupleur inductif et le deuxième coupleur inductif de l'élément de couverture fonctionnalisé adjacent.

Selon une particularité, l'infrastructure comporte au moins un premier élément de couverture fonctionnalisé connecté à un deuxième élément de couverture fonctionnalisé adjacent par une première liaison électrique sans contact établi par couplage inductif entre son premier coupleur inductif et le deuxième coupleur inductif dudit deuxième élément de couverture fonctionnalisé adjacent et connecté à un troisième élément de couverture fonctionnalisé par une deuxième liaison électrique sans contact établi par couplage inductif entre son deuxième coupleur inductif et le premier coupleur inductif dudit troisième élément de couverture fonctionnalisé adjacent.

Selon une autre particularité, l'infrastructure comporte un élément de couverture fonctionnalisé connecté via son deuxième coupleur inductif à un convertisseur central de type AC/AC.

### Brève description des figures

D'autres caractéristiques et avantages vont apparaître dans la description détaillée qui suit faite en regard des dessins annexés dans lesquels :
- La figure 1 représente de manière schématique un élément de couverture fonctionnalisé conforme à l'invention ;
- La figure 2 illustre le principe de fonctionnement des systèmes de liaison sans contact employés dans l'infrastructure fonctionnalisée de l'invention ;
- La figure 3A, la figure 3B, la figure 3C et la figure 3D représentent de manière schématique quatre variantes de réalisation de l'élément de couverture fonctionnalisé de l'invention ;
- La figure 4 représente une infrastructure fonctionnalisée conforme à l'invention, réalisée à partir des éléments de couverture fonctionnalisés conformes à l'invention ;
- La figure 5 représente une variante de réalisation de l'infrastructure fonctionnalisée de l'invention ;
- La figure 6 représente un exemple de réalisation de l'élément de couverture fonctionnalisé conforme à l'invention ;
- La figure 7 illustre, par une vue de côté, le principe d'association des éléments de couverture réalisés selon la structure de la figure 6 ;

### Description détaillée d'au moins un mode de réalisation

Dans la suite de la description, le terme DC signifie "Direct Current" pour courant continu, le terme AC signifie "Alternating Current" pour courant alternatif. On parlera aussi de tension AC pour exprimer une tension alternative et de tension DC pour exprimer une tension continue.

De manière connue, dans un convertisseur électrique, un étage de type AC comporte des interrupteurs de puissance commandés par une unité de commande pour fournir une tension variable. Un étage DC peut également être actif et comporter des interrupteurs de puissance commandés par l'unité de commande pour fournir une tension continue ou réalisé à l'aide de composants passifs, par exemple sous la forme d'un pont de diodes. Les différents convertisseurs évoqués dans la présente demande, de type DC/AC, AC/AC ou autre topologie sont bien connus dans l'état de la technique et ne sont donc pas décrits de manière approfondie.

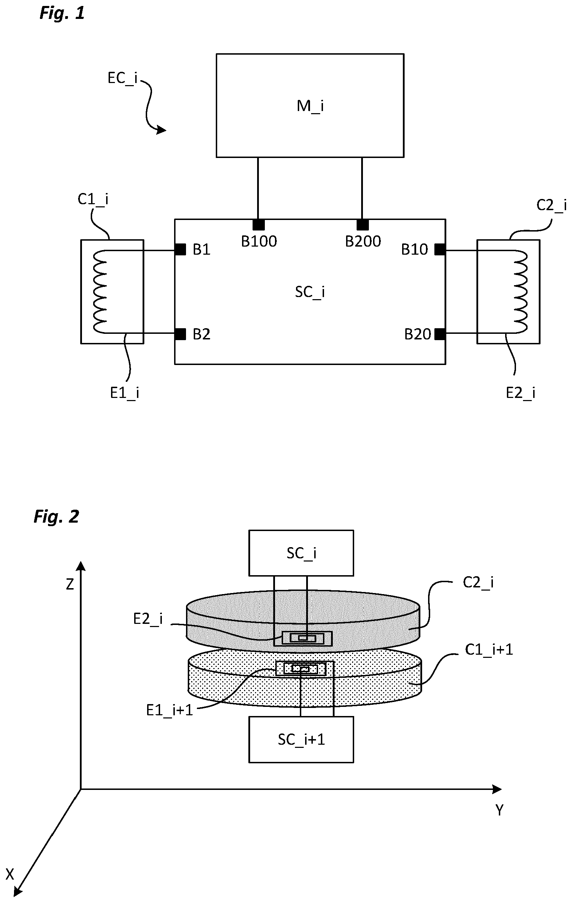

En référence à la figure 1, l'invention concerne un élément de couverture EC_i fonctionnalisé.

L'élément de couverture est dit fonctionnalisé car il est de type producteur d'énergie électrique ou récepteur d'énergie électrique.

La juxtaposition de plusieurs de ces éléments de couvertures fonctionnalisés, au sein d'une infrastructure fonctionnalisée permet de recouvrir une zone.

Par élément de couverture, on entend toute solution qui permet de former une surface plus ou moins étendue, par exemple :
- Une zone circulable de type route, parking, trottoir, piste cyclable,
- Une toiture ou façade d'un bâtiment, d'une habitation, d'un abri,
- Le toit d'un véhicule automobile,
- Tous types d'infrastructures susceptibles d'être installées et ajoutées sur une architecture existante telle qu'une route, un parking, un trottoir, un toit ou façade d'un bâtiment,...

En référence à la figure 1, chaque élément de couverture EC_i fonctionnalisé comporte :
- Un module fonctionnel M_i de type producteur d'énergie électrique ou de type consommateur d'énergie électrique ;
- Un système de conversion SC_i d'une énergie électrique générée par le module ou d'une énergie électrique destinée à alimenter le module ;
- Un premier coupleur inductif C1_i ;
- Un deuxième coupleur inductif C2_i ;

Ces différents composants de l'élément de couverture EC_i peuvent être réunis dans un même ensemble monobloc ou être répartis dans des boîtiers différents, reliés entre eux par des liaison souples ou semi-rigides par lesquelles transitent des câbles électriques.

De manière non limitative, le module fonctionnel M_i de l'élément de couverture fonctionnalisé 1 peut être choisi parmi :
- Un module photovoltaïque destiné à être positionné sur la zone à recouvrir afin de fonctionnaliser ladite zone pour générer de l'énergie électrique grâce à l'énergie solaire ;
- Un module à fonction de signalisation ou module lumineux, destiné à être positionné sur la zone à recouvrir et comportant par exemple des diodes lumineuses fournissant un éclairage ;
- Un module de recharge électrique par induction, par exemple pour charger un véhicule automobile électrique ;
- Un module de détection avec un ou plusieurs capteurs de tous types, par exemple pour mesurer la température, l'hygrométrie, la vitesse du vent, pour détecter une présence ;
- Un module de vidéosurveillance pour surveiller une zone ;
- Un module de chauffage pour chauffer une surface ;
- Un module de connexion à un réseau de communication sans-fil de type WiFi, Bluetooth, 4G, 5G ou équivalent ;

Chaque élément de couverture EC_i fonctionnalisé peut comporter un corps d'accueil de sa partie fonctionnelle. Ce corps d'accueil peut être :
- Un boîtier étanche dans lequel, par exemple, sont logées des diodes électroluminescentes d'un module à fonction de signalisation,
- Une plaque de support ou un encadrement ; par exemple dans le cas d'un module photovoltaïque, cette plaque peut prendre la forme d'une tuile intégrant des cellules photovoltaïques.

On verra que l'élément de couverture EC_i fonctionnalisé peut se présenter sous la forme d'un panneau ou d'une dalle, ayant une face interne destinée à venir en appui contre un bâti, formant une structure d'accueil et une face externe orientée vers l'extérieur.

Le panneau présente avantageusement une forme rectangulaire. Bien entendu, toute autre forme pourrait être envisagée. La juxtaposition de ces éléments permet de recouvrir une zone, pour former une route, une toiture ou une autre infrastructure, ou pour venir recouvrir une infrastructure existante telle qu'une route, une toiture... Les éléments peuvent par exemple être alignés suivant plusieurs rangées.

Selon son module fonctionnel M_i, l'élément de couverture EC_i peut comporter des cellules photovoltaïques réalisées sur sa face externe, des diodes lumineuses chargées d'émettre à travers sa face externe, des capteurs de tous types intégrés à son corps, un module de vidéo-surveillance logé dans son corps, un module de chauffage comportant par exemple une résistance logée dans son corps, un module de connexion sans-fil comportant une antenne et un circuit d'émission/réception logés dans son corps, ou une combinaison d'une ou plusieurs de ces solutions.

L'élément de couverture EC_i fonctionnalisé présente la particularité de comporter deux coupleurs inductifs C1_i, C2_i, lui permettant de s'insérer dans une rangée de plusieurs éléments juxtaposés. Dans la rangée, chaque élément de couverture EC_i fonctionnalisé peut ainsi être relié via deux liaisons électriques sans contact distinctes, avec deux éléments de couverture du même type et adjacents.

En référence à la figure 2, un système de liaison électrique de type sans contact, est réalisé en mettant en regard deux coupleurs inductifs (appartenant ici à deux éléments de couverture distincts), un premier coupleur inductif, dit primaire, doté d'un enroulement primaire et présentant une première surface de couplage et un deuxième coupleur inductif, dit secondaire, doté d'un enroulement secondaire. Sur la figure 2, les deux coupleurs inductifs C2_i et C1_i+1 appartiennent à deux éléments de couverture successifs dans une rangée (EC_i et EC_i+1).

A titre d'exemple, l'enroulement primaire peut être réalisé par sérigraphie sur une première carte de circuit imprimé ou par toute autre solution connue. La première carte de circuit imprimé est agencée pour positionner ledit enroulement primaire de manière adaptée dans un premier boîtier ou directement dans le corps d'accueil de l'élément de couverture en vue de réaliser une première surface de couplage.

L'enroulement secondaire peut également être réalisé par sérigraphie sur une deuxième carte de circuit imprimé ou par toute autre solution connue.

La deuxième carte est agencée pour positionner ledit enroulement secondaire de manière adaptée dans un deuxième boîtier ou dans le corps d'accueil de l'élément de couverture en vue de réaliser une deuxième surface de couplage.

L'un des deux coupleurs forme le primaire d'un transformateur et l'autre des deux coupleurs forme le secondaire du transformateur. Selon la nature du module employé, le transfert d'énergie entre les deux coupleurs sera réalisé dans un sens ou dans l'autre. Bien entendu, les termes "primaire" et "secondaire" sont à comprendre de manière non limitative et en tenant compte du sens de transmission de l'énergie électrique, de l'amont vers l'aval ou de l'aval vers l'amont.

Sur la figure 2, l'enroulement primaire est par exemple l'enroulement E2_i et l'enroulement secondaire est par exemple l'enroulement E1_i+1.

Chaque élément de couverture EC_i fonctionnalisé forme avantageusement un motif pouvant être reproduit plusieurs fois de manière identique pour former une rangée de plusieurs éléments de couverture. La rangée peut être réalisée suivant une seule direction ou en suivant plusieurs directions (par exemple en forme de L).

Dans une rangée de N éléments de couverture fonctionnalisés identiques, avec N supérieur ou égal à 3, chaque élément de couverture peut disposer d'un rang i avec i allant de 1 à N.

Dans la rangée, chaque élément de couverture de rang i, pour i allant de 2 à N-1 est connecté par une première liaison électrique sans contact avec l'élément de couverture de rang i-1 et par une deuxième liaison électrique sans contact avec l'élément de couverture de rang i+1. La première liaison électrique sans contact est réalisée en mettant en regard le premier coupleur inductif C1_i de l'élément de couverture fonctionnalisé de rang i avec le deuxième coupleur inductif C2_i-1 de l'élément de couverture de rang i-1 et la deuxième liaison électrique sans contact est réalisée en mettant en regard le deuxième coupleur inductif C2_i de l'élément de couverture de rang i avec le premier coupleur inductif C1_i+1 de l'élément de couverture de rang i+1.

Dans la rangée, l'élément de couverture de rang 1 est en entrée. Son deuxième coupleur inductif C2_1 est mis en regard du premier coupleur inductif de l'élément de couverture de rang 2 et son premier coupleur inductif est non employé.

Dans la rangée, l'élément de couverture de rang N est situé en bout de chaîne. Son deuxième coupleur inductif C2_N est mis en regard d'un coupleur inductif principal, sur lequel est connecté un réseau électrique. Son premier coupleur inductif C1_N est mis en regard du deuxième coupleur inductif C2_N-1 de l'élément de couverture de rang N-1.

Dans la rangée, le courant transite ainsi d'un élément à l'autre jusqu'au réseau à travers les liaisons électriques sans contact ainsi formés.

Dans chaque élément de couverture fonctionnalisée (pour i allant de 1 à N), le module M_i fournit de l'énergie électrique dans la rangée ou prélève de l'énergie électrique disponible sur la rangée, à l'aide du système de conversion SC_i d'énergie électrique adapté évoqué ci-dessus.

Le réseau peut comporter un convertisseur central 10 de type AC/AC situé en bout de chaîne, destiné à gérer la conversion de l'énergie électrique entre la chaîne d'éléments et le réseau. A titre d'exemple, le réseau peut être un réseau de type 230 V AC ou 400 VAC.

Pour chaque élément de couverture EC_i fonctionnalisé, Le système de conversion SC_i d'énergie électrique est un système doté d'interrupteurs de puissance commandés pour fournir de l'énergie électrique au module M_i (cas d'un module récepteur d'énergie électrique) ou pour convertir une énergie électrique fournie par le module M_i (cas d'un module producteur d'énergie électrique).

Ce système de conversion SC_i d'énergie électrique peut comporter plusieurs étages de conversion de puissance.

Sur la figure 1, le système de conversion SC_i comporte au moins deux premières bornes B1, B2 entre lesquelles est connecté le premier coupleur inductif C1_i, deux deuxièmes bornes B10, B20 entre lesquelles est connecté le deuxième coupleur inductif C2_i et deux troisièmes bornes B100, B200 entre lesquelles est connecté le module fonctionnel M_i de l'élément. Entre ces différentes bornes, le système SC_i comporte différents étages de conversion adaptés au module fonctionnel M_i employé et à l'infrastructure.

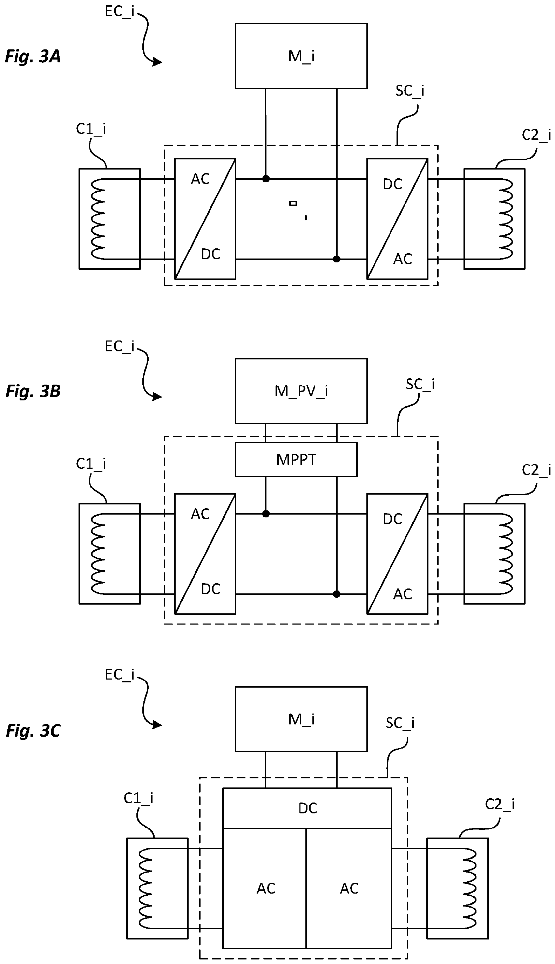

Les figures 3A à 3D montrent plusieurs schémas de réalisation du système de conversion SC_i de l'élément de couverture fonctionnalisé.

Figure 3A : Le système SC_i comporte, pour chaque coupleur inductif, un étage de conversion de type AC/DC, l'enroulement du coupleur étant connecté côté AC. Les deux étages sont reliés côté DC par un bus DC à deux lignes d'alimentation. Le module fonctionnel comporte deux bornes de connexion venant se connecter chacune sur une ligne d'alimentation distincte du bus.

Figure 3B : Dans le cas où le module fonctionnel de l'élément de couverture est un module photovoltaïque, le système SC_i peut disposer d'un circuit de suivi du point maximal de puissance MPPT. Ce circuit est interposé entre le module et les connexions du module au bus DC. De manière connue, ce circuit est commandé pour tirer le maximum d'énergie du module photovoltaïque et donc pour optimiser son fonctionnement. Ce circuit peut être employé dans toutes les autres configurations présentées, dès l'instant que le module fonctionnel M_i est de type photovoltaïque.

Figure 3C : Le système de conversion SC_i est conçu pour mutualiser l'étage DC des deux étages de conversion, associés chacun à un coupleur inductif distinct. Le système comporte ainsi un premier étage AC sur lequel est connecté l'enroulement du premier coupleur inductif, un deuxième étage AC sur lequel est connecté l'enroulement du deuxième coupleur inductif et seul un étage DC, qui est commun, auquel sont connectés en parallèle le premier étage AC et le deuxième étage AC. Le module fonctionnel M_i est connecté uniquement à cet étage DC commun.

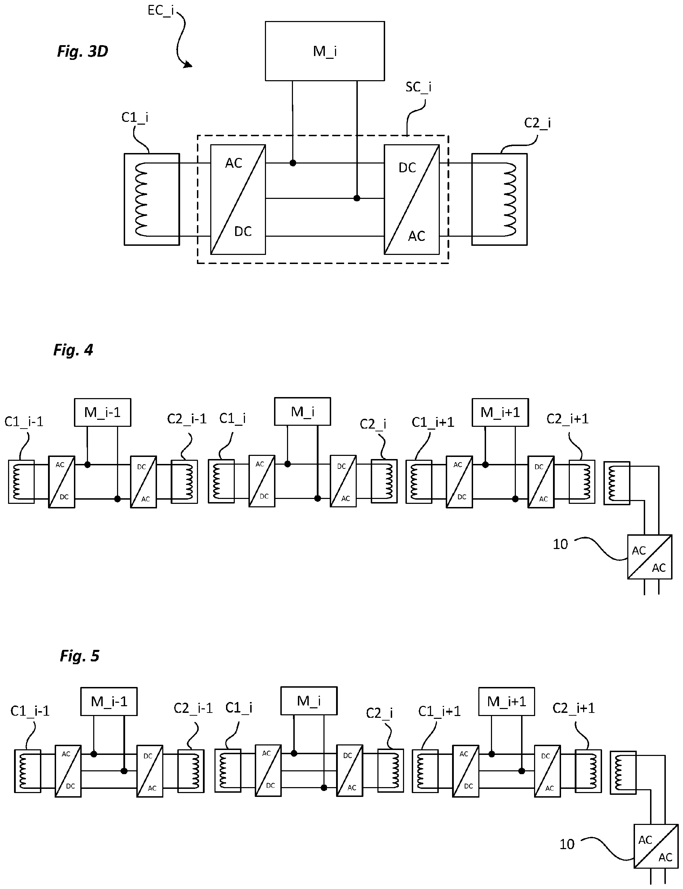

Figure 3D : le système SC_i dispose d'une ligne supplémentaire au niveau de son bus DC reliant les étages DC des deux convertisseurs AC/DC. Cette ligne supplémentaire permet de définir un potentiel électrique supplémentaire et de mieux répartir les courants lorsque plusieurs éléments sont alignés dans une même rangée. La figure 5 permet d'illustrer ce principe.

La figure 4 illustre la réalisation d'une rangée de plusieurs éléments de couverture, interconnectés via les systèmes de liaison sans contact, agencés entre chaque élément. En bout de chaîne, le convertisseur central 10 (ici de type AC/AC) est amené à gérer la conversion entre la rangée d'éléments et un réseau AC. Cette architecture correspond à celle décrite ci-dessus.

La figure 5 illustre une variante de réalisation de la rangée, dans laquelle chaque élément de couverture fonctionnalisé est réalisé selon l'architecture de la figure 3D décrite ci-dessus. Sur cette figure 5, on peut voir que, pour certains éléments de la rangée, leur module fonctionnel M_i est connecté entre deux lignes d'alimentation du bus du système de conversion électrique et que pour d'autres éléments de la rangée, leur module est connecté entre deux autres lignes du bus du système de conversion. Cette solution permet d'éviter une surcharge en courant sur le bus.

Dans chaque réalisation, il faut considérer que le module fonctionnel M_i peut être choisi selon l'une des réalisations décrites ci-dessus.

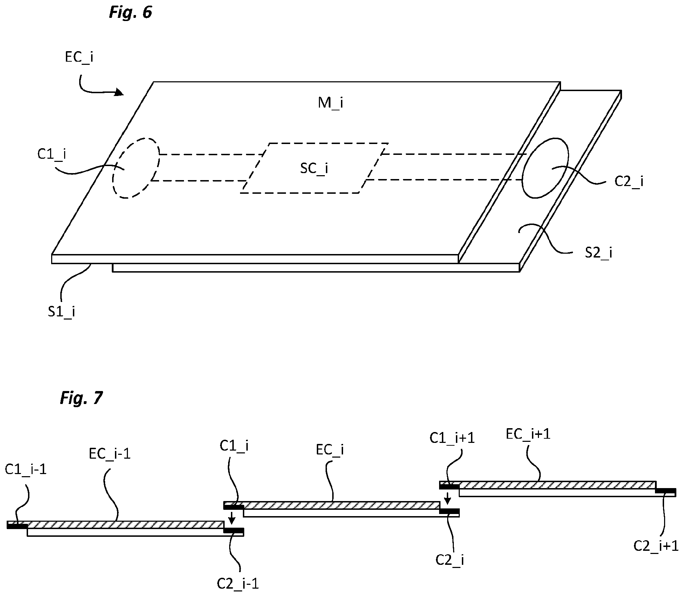

La figure 6 montre un exemple de réalisation d'un élément de couverture EC_i fonctionnalisé conforme à l'invention.

Dans cette réalisation, l'élément de couverture EC_i fonctionnalisé est constitué d'un ensemble monobloc formé d'un panneau ou d'une dalle. Le panneau dispose de deux formes complémentaires F1_i, F2_i, formées chacune par un décrochement définissant une première surface S1_i orientée vers l'intérieur et une deuxième surface S2_i orientée vers l'extérieur. Sur un panneau de forme rectangulaire, les deux formes peuvent être réalisées suivant deux côtés opposés du panneau. Cependant, dans le cas où la rangée de panneau ne serait pas réalisée suivant une seule direction (par exemple une rangée en L), un panneau pourrait présenter les deux formes complémentaires suivant deux de ces côtés adjacents.

Dans la rangée, la première surface S1_i du panneau de rang i est ainsi destinée à être chevauchée par la deuxième surface S2_i-1 du panneau adjacent situé en amont (rang i-1) et la deuxième surface S2_i du panneau de rang i est destinée à être chevauchée par la première surface S1_i+1 du panneau adjacent situé en aval (rang i+1). Le premier coupleur inductif est logé au-dessus de la première surface S1_i et le deuxième coupleur est logé au-dessous de la deuxième surface S2_i.

En référence à la figure 7, lorsque le panneau de rang i est assemblé avec un premier panneau de rang i-1 et un deuxième panneau de rang i+1, sa première surface S1_i est chevauchée par la deuxième surface S2_i-1 du panneau de rang i-1 et sa deuxième surface S2_i est chevauchée par la première surface S1_i+1 du panneau de rang i+1. Lors de l'installation des panneaux, grâce aux chevauchements et à la complémentarité des formes des panneaux assemblés, le premier coupleur inductif C1_i du panneau de rang i est automatiquement mis en regard du deuxième coupleur inductif C2_i-1 du panneau de rang i-1 et son deuxième coupleur inductif C2_i est automatiquement mis en regard du premier coupleur inductif C1_i+1 du panneau de rang i+1.

Comme indiqué sur la figure 6, l'ensemble des circuits électroniques associés aux deux coupleurs inductifs peut être logé dans le corps du panneau, par exemple sur au moins une carte placée entre les deux coupleurs inductifs. Les circuits électroniques peuvent notamment comporter les étages DC et AC des convertisseurs du système SC_i associés aux coupleurs.

La solution de l'invention présente ainsi de nombreux avantages, parmi lesquels :
- Elle permet de faciliter la réalisation d'une infrastructure fonctionnalisée de type route ou toiture, aucun câblage n'étant nécessaire grâce à l'emploi de liaisons par induction d'un élément à un autre ;
- Chaque élément de couverture fonctionnalisé est indépendant et peut être manipulé, sans avoir à le déconnecter électriquement ;
- L'infrastructure est facile et rapide à installer, notamment grâce à l'emploi des formes complémentaires réalisées sur les panneaux ;
- L'infrastructure utilise des composants classiques et facilement disponibles ;

## Revendications

1. Elément de couverture (EC_i) qui est fonctionnalisé par un module (M_i) de type générateur ou récepteur d'énergie électrique, et destiné à recouvrir une zone, ledit élément de couverture (EC_i) comprenant un système de conversion (SC_i) d'une énergie électrique sur lequel est connecté ledit module (M_i), ledit système de conversion (SC_i) étant commandé pour fournir de l'énergie électrique au module (M_i) ou pour convertir l'énergie électrique fournie par le module (M_i), ledit élément de couverture (EC_i) étant **caractérisé en ce qu'**il comporte :
- Un premier coupleur inductif (C1_i) connecté audit système de conversion et agencé pour établir une première liaison sans contact avec un premier élément de couverture adjacent,
- Un deuxième coupleur inductif (C2_i) connecté audit système de conversion et agencé pour établir une deuxième liaison sans contact avec un deuxième élément de couverture adjacent, distinct du premier élément de couverture et **en ce que**
- Ledit module (M_i) de type générateur ou récepteur d'énergie électrique, le système de conversion (SC_i), le premier coupleur inductif (C1_i) et le deuxième coupleur inductif (C2_i) sont réunis dans un même ensemble monobloc.

2. Elément de couverture selon la revendication 1, **caractérisé en ce que** le système de conversion (SC_i) comporte au moins un étage DC sur lequel est connecté ledit module (M_i).

3. Elément de couverture selon la revendication 2, **caractérisé en ce que** ledit étage DC comporte un bus DC à deux ou trois lignes d'alimentation.

4. Elément de couverture selon la revendication 2, **caractérisé en ce que** le système de conversion (SC_i) comporte un premier étage AC auquel est connecté d'une part le premier coupleur inductif (C1_i) et d'autre part ledit au moins un étage DC.

5. Elément de couverture selon la revendication 4, **caractérisé en ce que** le système de conversion (SC_i) comporte un deuxième étage AC auquel est connecté d'une part le deuxième coupleur inductif (C2_i) et d'autre part ledit au moins un étage DC.

6. Elément de couverture selon l'une des revendications 2 à 5, **caractérisé en ce qu'**il comporte un circuit de suivi du point maximal de puissance (MPPT), connecté audit module (M_i) et audit au moins un étage DC.

7. Elément de couverture selon l'une des revendications 1 à 6, **caractérisé en ce qu'**il se présente sous la forme d'un panneau disposant à deux côtés opposés de deux formes complémentaires, la première forme définissant une première surface (S1_i) de chevauchement sous laquelle est placé le premier coupleur inductif (C1_i) et la deuxième forme définissant une deuxième surface (S2_i) de chevauchement sous laquelle est placé le deuxième coupleur inductif (C2_i).

8. Elément de couverture selon l'une des revendications 1 à 7, **caractérisé en ce que** le module (M_i) est de type photovoltaïque.

9. Elément de couverture selon l'une des revendications 1 à 7, **caractérisé en ce que** le module (M_i) est de type lumineux.

10. Infrastructure électrique fonctionnalisée, comprenant au moins trois éléments de couverture (EC_i), chacun fonctionnalisé par un module de type générateur ou récepteur d'énergie électrique, **caractérisée en ce que** :
- Chaque élément de couverture est tel que défini dans l'une des revendications 1 à 9,
- Lesdits éléments de couverture fonctionnalisés sont positionnés de manière adjacentes,
- Chaque élément de couverture fonctionnalisé étant connecté à au moins un élément de couverture fonctionnalisé adjacent par une liaison électrique sans contact établi par couplage inductif entre son premier coupleur inductif et le deuxième coupleur inductif de l'élément de couverture fonctionnalisé adjacent.

11. Infrastructure fonctionnalisée selon la revendication 10, **caractérisée en ce qu'**elle comporte au moins un premier élément de couverture (EC_i) fonctionnalisé connecté à un deuxième élément de couverture (EC_i-1) fonctionnalisé adjacent par une première liaison électrique sans contact établi par couplage inductif entre son premier coupleur inductif (C1_i) et le deuxième coupleur inductif (C2_i-1) dudit deuxième élément de couverture (EC_i-1) fonctionnalisé adjacent et connecté à un troisième élément de couverture (EC_i+1) fonctionnalisé par une deuxième liaison électrique sans contact établi par couplage inductif entre son deuxième coupleur inductif (C2_i) et le premier coupleur inductif (C1_i+1) dudit troisième élément de couverture fonctionnalisé (EC_i+1) adjacent.

12. Infrastructure fonctionnalisée selon la revendication 10 ou 11, **caractérisée en ce qu'**elle comporte un élément de couverture fonctionnalisé connecté via son deuxième coupleur inductif à un convertisseur central (10) de type AC/AC.

## Patentansprüche

1. Abdeckelement (EC_i), das von einem Modul (M_i) vom Typ Generator oder Empfänger elektrischer Energie funktionalisiert wird und dazu bestimmt ist, einen Bereich abzudecken, wobei das Abdeckelement (EC_i) ein Umwandlungssystem (SC_i) einer elektrischen Energie enthält, mit dem das Modul (M_i) verbunden ist, wobei das Umwandlungssystem (SC_i) gesteuert wird, um elektrische Energie an das Modul (M_i) zu liefern oder um die vom Modul (M_i) gelieferte elektrische Energie umzuwandeln, wobei das Abdeckelement (EC_i) **dadurch gekennzeichnet ist, dass** es aufweist:
- einen ersten induktiven Koppler (C1_i), der mit dem Umwandlungssystem verbunden und eingerichtet ist, um eine erste kontaktlose Verbindung mit einem ersten benachbarten Abdeckelement aufzubauen,
- einen zweiten induktiven Koppler (C2_i), der mit dem Umwandlungssystem verbunden und eingerichtet ist, um eine zweite kontaktlose Verbindung mit einem zweiten benachbarten Abdeckelement anders als das erste Abdeckelement aufzubauen,
und dass
- das Modul (M_i) vom Typ Generator oder Empfänger elektrischer Energie, das Umwandlungssystem (SC_i), der erste induktive Koppler (C1_i) und der zweite induktive Koppler (C2_i) in einer gleichen einstückigen Einheit vereint sind.

2. Abdeckelement nach Anspruch 1, **dadurch gekennzeichnet, dass** das Umwandlungssystem (SC_i) mindestens eine DC-Stufe aufweist, mit der das Modul (M_i) verbunden ist.

3. Abdeckelement nach Anspruch 2, **dadurch gekennzeichnet, dass** die DC-Stufe einen DC-Bus mit zwei oder drei Versorgungsleitungen aufweist.

4. Abdeckelement nach Anspruch 2, **dadurch gekennzeichnet, dass** das Umwandlungssystem (SC_i) eine erste AC-Stufe aufweist, mit der einerseits der erste induktive Koppler (C1_i) und andererseits die mindestens eine DC-Stufe verbunden ist.

5. Abdeckelement nach Anspruch 4, **dadurch gekennzeichnet, dass** das Umwandlungssystem (SC_i) eine zweite AC-Stufe aufweist, mit der einerseits der zweite induktive Koppler (C2_i) und andererseits die mindestens eine DC-Stufe verbunden ist.

6. Abdeckelement nach einem der Ansprüche 2 bis 5, **dadurch gekennzeichnet, dass** es eine Überwachungsschaltung des maximalen Leistungspunkts (MPPT) aufweist, die mit dem Modul (M_i) und mit der mindestens einen DC-Stufe verbunden ist.

7. Abdeckelement nach einem der Ansprüche 1 bis 6, **dadurch gekennzeichnet, dass** es in Form einer Platte vorliegt, die auf zwei gegenüberliegenden Seiten über zwei komplementäre Formen verfügt, wobei die erste Form eine erste Überlappungsfläche (S1_i) definiert, unter der der erste induktive Koppler (C1_i) angebracht ist, und die zweite Form eine zweite Überlappungsfläche (S2_i) definiert, unter der der zweite induktive Koppler (C2_i) angebracht ist.

8. Abdeckelement nach einem der Ansprüche 1 bis 7, **dadurch gekennzeichnet, dass** das Modul (M_i) vom photovoltaischen Typ ist.

9. Abdeckelement nach einem der Ansprüche 1 bis 7, **dadurch gekennzeichnet, dass** das Modul (M_i) vom Leuchttyp ist.

10. Funktionalisierte elektrische Infrastruktur, die mindestens drei Abdeckelemente (EC_i) enthält, die je von einem Modul vom Typ Generator oder Empfänger elektrischer Energie funktionalisiert werden, **dadurch gekennzeichnet, dass**:
- jedes Abdeckelement wie in einem der Ansprüche 1 bis 9 definiert ist,
- die funktionalisierten Abdeckelemente benachbart positioniert sind,
- jedes funktionalisierte Abdeckelement mit mindestens einem benachbarten funktionalisierten Abdeckelement durch eine kontaktlose elektrische Verbindung verbunden ist, die durch induktive Kopplung zwischen seinem ersten induktiven Koppler und dem zweiten induktiven Koppler des benachbarten funktionalisierten Abdeckelements aufgebaut wird.

11. Funktionalisierte Infrastruktur nach Anspruch 10, **dadurch gekennzeichnet, dass** sie mindestens ein erstes funktionalisiertes Abdeckelement (EC_i) aufweist, das mit einem benachbarten zweiten funktionalisierten Abdeckelement (EC_i-1) durch eine erste kontaktlose elektrische Verbindung verbunden ist, die durch induktive Kopplung zwischen seinem ersten induktiven Koppler (C1_i) und dem zweiten induktiven Koppler (C2_i-1) des benachbarten zweiten funktionalisierten Abdeckelements (EC_i-1) aufgebaut wird, und mit einem dritten funktionalisierten Abdeckelement (EC_i+1) durch eine zweite kontaktlose elektrische Verbindung verbunden ist, die durch induktive Kopplung zwischen seinem zweiten induktiven Koppler (C2_i) und dem ersten induktiven Koppler (C1_i+1) des benachbarten dritten funktionalisierten Abdeckelements (EC_i+1) aufgebaut wird.

12. Funktionalisierte Infrastruktur nach Anspruch 10 oder 11, **dadurch gekennzeichnet, dass** sie ein funktionalisiertes Abdeckelement aufweist, das über seinen zweiten induktiven Koppler mit einem zentralen Wandler (10) vom Typ AC/ AC verbunden ist.

## Claims

1. Coverage element (EC_i) which is operationalized by a module (M_i) which generates or receives electrical energy, and intended to cover an area, said coverage element (EC_i) comprising a system (SC_i) for converting electrical energy to which said module (M_i) is connected, said conversion system (SC_i) being controlled so as to deliver electrical energy to the module (M_i) or so as to convert the electrical energy delivered by the module (M_i), said coverage element (EC_i) being **characterized in that** it comprises:
- a first inductive coupler (C1_i) connected to said conversion system and arranged to establish a first contactless link with a first adjacent coverage element,
- a second inductive coupler (C2_i) connected to said conversion system and arranged to establish a second contactless link with a second adjacent coverage element, which is distinct from the first coverage element and **in that**
- said module (M_i) which generates or receives electrical energy, the conversion system (SC_i), the first inductive coupler (C1_i) and the second inductive coupler (C2_i) are brought together in the same monobloc assembly.

2. Coverage element according to Claim 1, **characterized in that** the conversion system (SC_i) comprises at least one DC stage to which said module (M_i) is connected.

3. Coverage element according to Claim 2, **characterized in that** said DC stage comprises a DC bus with two or three power lines.

4. Coverage element according to Claim 2, **characterized in that** the conversion system (SC_i) comprises a first AC stage to which the first inductive coupler (C1_i), on the one hand, and said at least one DC stage, on the other hand, are connected.

5. Coverage element according to Claim 4, **characterized in that** the conversion system (SC_i) comprises a second AC stage to which the second inductive coupler (C2_i), on the one hand, and said at least one DC stage, on the other hand, are connected.

6. Coverage element according to one of Claims 2 to 5, **characterized in that** it comprises a circuit for tracking the maximum power point (MPPT), which is connected to said module (M_i) and to said at least one DC stage.

7. Coverage element according to one of Claims 1 to 6, **characterized in that** it is in the form of a panel having two complementary shapes on two opposite sides, the first shape defining a first overlapping surface (S1_i) under which the first inductive coupler (C1_i) is placed and the second shape defining a second overlapping surface (S2_i) under which the second inductive coupler (C2_i) is placed.

8. Coverage element according to one of Claims 1 to 7, **characterized in that** the module (M_i) is photovoltaic.

9. Coverage element according to one of Claims 1 to 7, **characterized in that** the module (M_i) is luminous.

10. Operationalized electrical infrastructure, comprising at least three coverage elements (EC_i), each of which is operationalized by a module which generates or receives electrical energy, **characterized in that**:
- each coverage element is as defined in one of Claims 1 to 9,
- said operationalized coverage elements are positioned adjacently,
- each operationalized coverage element is connected to at least one adjacent operationalized coverage element by a contactless electrical link established by inductive coupling between its first inductive coupler and the second inductive coupler of the adjacent operationalized coverage element.

11. Operationalized infrastructure according to Claim 10, **characterized in that** it comprises at least a first operationalized coverage element (EC_i) connected to an adjacent second operationalized coverage element (EC_i-1) by a first contactless electrical link established by inductive coupling between its first inductive coupler (C1_i) and the second inductive coupler (C2_i-1) of said adjacent second operationalized coverage element (EC_i-1) and connected to a third operationalized coverage element (EC_i+1) by a second contactless electrical link established by inductive coupling between its second inductive coupler (C2_i) and the first inductive coupler (C1_i+1) of said adjacent third operationalized coverage element (EC_i+1).

12. Operationalized infrastructure according to Claim 10 or 11, **characterized in that** it comprises an operationalized coverage element connected, via its second inductive coupler, to a central AC/AC converter (10).
